(19) Europäisches Patentamt / European Patent Office / Office européen des brevets

(11) **EP 2 619 372 B1**

(12) **EUROPEAN PATENT SPECIFICATION**

(45) Date of publication and mention
of the grant of the patent:
**25.11.2020 Bulletin 2020/48**

(21) Application number: **11761159.0**

(22) Date of filing: **20.09.2011**

(51) Int Cl.:
*E02F 3/90* (2006.01)     *G01F 23/14* (2006.01)

(86) International application number:
**PCT/NL2011/050632**

(87) International publication number:
**WO 2012/039608 (29.03.2012 Gazette 2012/13)**

(54) **METHOD AND DEVICE FOR DETERMINING A VOLUME OF A SETTLED BED IN A MIXTURE IN A LOADING SPACE**

VERFAHREN UND VORRICHTUNG ZUR BESTIMMUNG EINES VOLUMENS EINES ABGESETZTEN BETTES IN EINER MISCHUNG IN EINEM LADERAUM

PROCÉDÉ ET DISPOSITIF POUR DÉTERMINER UN VOLUME D'UN LIT DÉPOSÉ DANS UN MÉLANGE DANS UN ESPACE DE CHARGEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2010 NL 2005373**

(43) Date of publication of application:
**31.07.2013 Bulletin 2013/31**

(73) Proprietor: **IHC Holland IE B.V.**
**3361 EP Sliedrecht (NL)**

(72) Inventors:
- **DE KEIZER, Cornelis**
  **NL-3328 BC Dordrecht (NL)**
- **BRAAKSMA, Jelmer**
  **NL-2645 GP Delfgauw (NL)**

(74) Representative: **Nederlandsch Octrooibureau**
**P.O. Box 29720**
**2502 LS The Hague (NL)**

(56) References cited:
EP-A1- 0 456 629     EP-A1- 1 783 466
JP-A- 5 306 985     JP-A- 62 017 640
US-A- 4 365 509

- **T. L. Welp et al: "Initial Corps Experience with Tons Dry Solids (TDS) Measurement", , July 2000 (2000-07), XP002637154, Retrieved from the Internet: URL:http://handle.dtic.mil/100.2/ADA380019 [retrieved on 2011-05-09] cited in the application & Anonymous: "Initial Corps Experience with Tons Dry Solids (TDS) Measurement", DTIC online (Information for the Defense Community) , XP002641091, Retrieved from the Internet: URL:http://www.dtic.mil/srch/doc?collectio n=t3&id=ADA380019 [retrieved on 2011-05-09]**
- **JUAN J MUÑOZ-PEREZ ET AL: "Portable Meter System for Dry Weight Control in Dredging Hoppers", JOURNAL OF WATERWAY, PORT, COASTAL, AND OCEAN ENGINEERING, vol. 129, no. 2, 1 March 2003 (2003-03-01) , pages 79-85, XP008136140, AMERICAN SOCIETY OF CIVIL ENGINEERS, RESTON, VA, US ISSN: 0733-950X, DOI: 10.1061/(ASCE)0733-950X(2003)129:2(79) [retrieved on 2003-02-14] cited in the application**

**Description**

SPECIALIST FIELD OF THE INVENTION

The present invention relates to a method and a device for determining a volume $V_s$ of a settled bed in a mixture in a loading space of a machine, wherein the mixture consists of a settled bed and a mixture soup which is located above the settled bed.

PRIOR ART

The determination of the settled quantity of substrate in the loading space of a machine, for example in the bin (open area or hopper) of a vessel, such as a dredger, e.g. a trailing suction hopper dredger, is very important for ensuring that the dredging is as efficient as possible.

Trailing suction hopper dredgers of this type are used to maintain the depth of or deepen shipping channels, to dredge new shipping channels, and for sand and gravel extraction, for example for infrastructure projects and land reclamation.

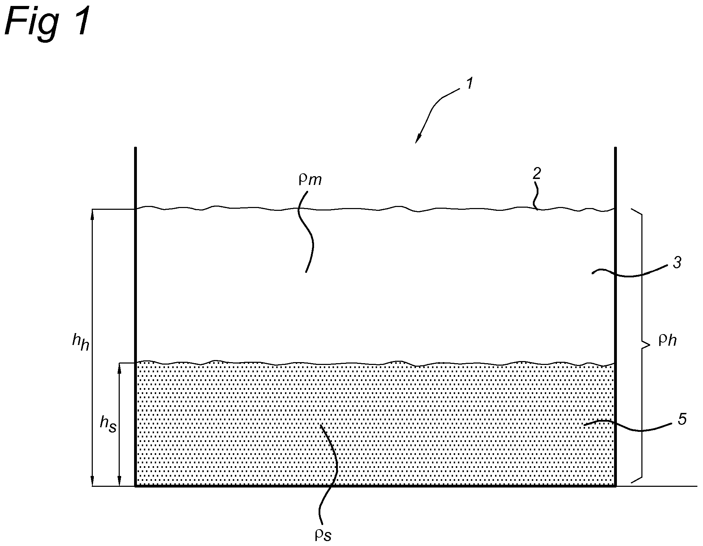

Depending on the type of work, widely differing materials are dredged: sludge, clay, fine sand, coarse sand, gravel, rock and often a combination thereof. The suction process must match the type of substrate. The speed with which the loading space is filled must match the settling speed of the dredged mixture. If the loading space is filled too quickly, a part of the material will not be given enough time to settle and will leave the ship once more via an overflow. Filling which is too slow is not attractive from a cost perspective. It is therefore very important to know how quickly the dredged-up mixture of water and substrate settles in the loading space. This will be explained in detail with reference to Fig. 1. Fig. 1 shows a cross section of a loading space of a machine.

The dredging cycle starts with an empty loading space 1, which is loaded in a determined time (typically around 1 to 2 hours). In that time, the level of the mixture rises in the loading space 1 and a part of the mixture simultaneously settles. The settled part is referred to as the sand bed or settled bed 5 (settled sand). The unsettled mixture above it is referred to as the mixture soup 3.

If the maximum loading space level is reached, the top layer 2 of the mixture soup 3 is fed outwards via a so-called overflow and loading can continue for a further period (this situation is not shown in Fig. 1).

The reason for this is that the density $\rho_m$ of the mixture soup 3 which leaves the loading space 1 via the overflow is then still lower than the density which is loaded. The height of the settled bed 5 rises and therefore also the density $\rho_m$ of the mixture soup 3 above the settled bed 5. This process continues until the density $\rho_m$ of the mixture soup 3 which flows away through the overflow is so high that it is no longer efficient to continue loading.

To allow the loading process to run as efficiently as possible, it is necessary to know the settling speed: sludge does not settle, fine sand settles very slowly, coarse sand more quickly, whereas gravel and rock drop immediately. Depending on this settling speed and the associated speed at which the height $h_s$ of the settled bed 5 rises, the dredging process can be devised differently in terms of loading speed and density of the dredged mixture, so that the settling process will run more efficiently.

It is therefore advantageous to know the height $h_s$ of the settled bed 5 during the loading. Techniques for determining this height are known from the prior art.

In the patent document with publication number EP 0 456629, various measuring principles are described, wherein the density is measured as a function of the height of the loading space via radioactive means. This method is complex, expensive and difficult to carry out due to the radiation hazard, and its use is therefore also very restricted.

In the patent document with publication number EP1 783 466, the height $h_s$ of the settled bed is only measured afterwards, after waiting until all of the substrate has settled once the loading process has stopped. This method assumes that the mixture above the settled bed consists of water. This method is therefore not suitable for use during the loading process, so that the loading process cannot be influenced during loading.

It is furthermore known from the prior art for a mixture height $h_h$ of the mixture in the loading space to be determined, for example, via ultrasound or radar distance measurements from above. The height of the dredging mixture $h_h$ is thus known and the volume $V_h$ can be calculated, taking into account the trim and heel of the machine (vessel) and the shape of the loading space 1.

The weight of the dredging mixture in the loading space 1 is also measured. This can be done with the aid of a suitable weighing installation. If the machine is a vessel, this can be done by measuring the change in depth of the vessel: the mass of the additional displaced quantity of water $\Delta V_w$ is equal to the weight m in the loading space: $m = \Delta V_w \cdot \rho_w$, where $\rho_w$ is the density of the water in which the vessel travels.

The average density in the loading space can be calculated from these data: $\rho_h = m / V_h$. However, the height of the settled bed in the mixture is not thus known and it is therefore also not possible to determine the speed of increase in the height of the settled bed.

From "Initial Corps Experience with Tons Dry Solids (TDS) Measurement" (by T. L. Welp et al), July 2000 (found on the Internet at: http://handle.dtic.mil/100.2/ADA380019 on 5 September 2011), a measurement method is known for determining how much mass of solid particles is present in a hopper. However, this document provides no solution for determining how much thereof has actually settled. This document is therefore only usable for analysing hoppers which are already fully loaded, but is not suitable for use during the loading process for determining the quantity of settled material.

The document entitled "Portable Meter System for Dry Weight Control in Dredging Hoppers" (by JUAN J MUN0Z-PEREZ ET AL), JOURNAL OF WATERWAY, PORT, COASTAL, AND OCEAN ENGINEERING, part 129, no. 2, 1 March 2003 (2003-03-01), pages 79-85, AMERICAN SOCIETY OF CIVIL ENGINEERS, RESTON, VA, US, also describes how to determine the total mass of the sand present in the hopper. However, this document does not describe how to determine which part thereof is settled.

US 4 365 509 A (CORNELIS CHRISTIAAN A) is also geared towards determining the total mass in the hopper, and not to determining the height of the settled bed. Moreover, the measurement method according to this document uses a weight on a rope to determine the height of the settled bed. This is an inaccurate and unwieldy method, which is also unsuitable for use during bad weather. Moreover, continuous measurements cannot be carried out with a method of this type.

BRIEF DESCRIPTION

One object is to provide a method and a device for the accurate and simple determination of the height of a settled bed in a mixture in a loading space of a machine. A further object is to be able to determine this during loading, as a result of which the speed of the increase in the height of the settled bed can be determined simply and accurately during loading, whereby the settling speed can also be determined.

This object is achieved by a method for determining a volume ($V_s$) of a settled bed in a mixture in a loading space of a machine, wherein the mixture consists of a settled bed and a mixture soup which is located above the settled bed, and wherein the method comprises:

a) determining a mixture height ($h_h$) of the mixture in the loading space, and determining a mixture volume ($V_h$) of the mixture in the loading space on the basis of the mixture height ($h_h$),
b) determining the mass (m) of the mixture in the loading space,

wherein the method furthermore comprises:

c) determining a density of the settled mixture ($\rho_s$),
d) determining a density of the mixture soup ($\rho_{mi}$), and
e) determining the volume ($V_s$) of the settled bed on the basis of the determined mixture volume ($V_h$), the mass (m) of the mixture, the density of the settled mixture ($\rho_s$), and the determined density of the mixture soup ($\rho_{mi}$) using the formula $V_s = (m - V_h \rho_{mi}) / (\rho_s - \rho_{mi})$.

With a method of this type, it is possible to determine the height of a settled bed in a mixture in a loading space of a machine during loading, as a result of which the speed of increase in the height of the settled bed can be determined simply and accurately during loading, whereby the settling speed can also be determined.

The person skilled in the art will understand that, in step a), account can be taken of the shape of the hopper (loading space) and the leaning state of the hopper in the longitudinal direction (trim) and possibly heel. The heel will be less relevant in practice. The correction resulting from the heel appears to be negligible. The mixture volume ($V_h$) of the mixture in the loading space can be determined in a simple manner from the mixture height ($h_h$) of the mixture in the loading space. Tables $T_j$ are available here for dredgers for various trim angles $t_j$, e.g. for j = -3, -2, -1, 0, 1, 2 and 3 degrees. If a ship has, for example, a trim of between 2 and 3 degrees, the volume $V_{h2}$ associated with the height $h_h$ is looked up in the loading space table $T_2$ for 2 degrees and the volume $V_{h3}$ in the loading space table $T_3$ for 3 degrees. The volume associated with the trim t can then be calculated by means of linear interpolation: $V_h = V_{h2} + (V_{h3} - V_{h2})^* (t -2)/(3-2)$.

It must be noted that calculations of this type are known to the person skilled in the art and are part of his common general knowledge.

According to one embodiment, d) comprises

- determining a pressure in the mixture soup ($P_i$) at a known height $h_i$ in the mixture soup, and
- determining the density of the mixture soup ($\rho_{mi}$) on the basis of the determined pressure in the mixture soup ($P_i$) at a known height ($h_i$) and the mixture height ($h_h$) using the formula: $\rho_{mi} = P_i / \{ g (h_h - h_i)\}$.

According to an alternative embodiment, d) comprises determining the density of the mixture soup ($\rho_{mi}$) by means of

- determining a density-dependent parameter in the mixture soup, such as a pressure, strength of radioactive radiation, electromagnetic waves/radiation or ultrasonic sound,

- determining the density of the mixture soup ($\rho_{mi}$) on the basis of the determined density-dependent parameter.

In determining the strength of radioactive radiation, electromagnetic waves/radiation or ultrasonic sound, this strength/intensity can be compared with a source strength of a respective source, wherein the difference between the source strength and the determined strength and/or difference between a determined strength and a previously determined strength can be used to determine the density. Instead of the comparison with the source strength, the determined strength can also be compared with a reference value, for example the measured strength in clear water. It is also possible to determine the behaviour of the signal in the medium instead of determining the strength/intensity.

Account is furthermore taken here of the distance between the source and the meter of the density-dependent parameter and knowledge of the behaviour of the signal (radiation/sound) in the medium as a function of the distance and the density. Thus, it is known for radiation that the intensity decreases exponentially with the density.

The following relation is known for radioactive radiation: $\rho_{mi} = \rho_{water} + C1 \cdot \log \{$(received radioactive pulses per minute)/C2$\}$, where C1 and C2 are constants.

The following calculation is known for electromagnetic radiation: $\rho_{mi} = \rho_{water} + C3$ (change in time behaviour of the received signal in relation to water) $+ C4 \cdot$ (attenuation in decibels of the received signal in relation to water), where C3 and C4 are constants.

The following calculation is known for ultrasonic signals: $\rho_{mi} = \rho_{water} + C5$ (change in reflected measured signals in relation to water), where C5 is a constant.

Step d) can be carried out in both cases by means of a meter placed in the mixture soup, such as a pressure meter, which, for example, can be placed in the wall of the loading space.

According to one embodiment, a method is provided wherein a) comprises determining the trim t and possibly heel of the machine, and calculating the mixture volume ($V_h$) of the mixture in the loading space on the basis of the mixture height ($h_h$), the trim and possibly the heel: $V_h = f (h_h, \text{trim, heel})$.

An example of this is $V_h = T_j (h_h) + (T_{j+1} (h_h) - T_j (h_h))^* (t - t_j)/(t_{j+1} - t_j)$, where $T_j$ is the table trim directly below the current trim t.

Instead of the loading space tables $T_j$, loading space functions $f_j$ per trim $t_j$ can be used. A function of this type may be a polynomial $V_{hj} = a\, h_h + b\, h_h^2 + c\, h_h^2 + d\, h_h^3$ .... And the volume is then again determined by means of interpolation $V_h = V_{hj}(h_h) + (V_{hj+1} (h_h) - V_{hj} (h_h))^* (t - t_j)/(t_j - t_{j+1})$.

The use of the tables and the interpolations is described here as $V_h = f (h_h, \text{trim, heel})$. It will be clear that the inverse calculation is also possible: $h = f^{-1} (V, t, \text{heel})$. This inverse formula $f^{-1}$ is then necessary in order to determine the sand bed height, as will be discussed below.

According to one embodiment, a method is provided wherein b) comprises determining the mass m of the mixture on the basis of the sinkage of the machine.

According to one embodiment, a method is provided wherein c) comprises estimating or measuring the density of the settled mixture ($\rho_s$).

According to one embodiment, a method is provided wherein d) is carried out with at least one meter placed in the mixture soup, such as a pressure meter, a radiation meter with an associated source or a sound meter with an associated source.

According to one embodiment, a method is provided wherein d) is carried out with two or more meters placed at different heights in the loading space, such as pressure meters, radiation meters with associated sources, or sound meters with associated sources.

According to one embodiment, a method is provided wherein the pressure meter or the number of pressure meters is/are formed by a bubble measurement system.

According to one embodiment, a method is provided wherein e) furthermore comprises determining the height of the settled bed ($h_s$) on the basis of the determined volume of the settled bed using a loading space table taking into account the trim and possibly the heel of the machine (e.g. ship), or using a formula: $h_s = f^{-1} (V_s, \text{trim, heel})$. The formula may, for example, be a polynomial. The conversion of volumes to heights and vice versa is known to the person skilled in the art.

According to one embodiment, a method is provided wherein c) comprises establishing that the settled bed passes a pressure measurement point by establishing that the pressure on a determined pressure measurement point changes by more than a determined threshold value, determining a corresponding volume of the settled bed (Vs) and calculating the density of the settled bed ($\rho_s$).

According to one embodiment, a method is provided wherein c) comprises establishing that the settled bed passes a meter by establishing that the determined density becomes greater than a predefined determined threshold value, determining a corresponding volume of the settled bed ($V_s$) and calculating the density of the settled bed ($\rho_s$).

The meter may, for example, be a pressure meter, a radiation meter with an associated source or a sound meter with an associated source.

According to one aspect, a method is provided for monitoring the volume ($V_s$) of a settled bed in a mixture in a loading space of a machine, wherein the mixture comprises a settled bed and a mixture soup which is located above the settled bed, wherein the method comprises determining a volume ($V_s$) of a settled bed at least twice at different times.

According to one embodiment, a method is provided wherein the method furthermore comprises determining a speed of increase of the volume ($V_s$) of the settled bed.

According to one aspect, a device is provided for determining a volume ($V_s$) of a settled bed in a mixture in a loading space of a machine, wherein the mixture comprises a settled bed and a mixture soup which is located above the settled bed, and wherein the device is arranged for:

- determining a mixture height ($h_h$) of the mixture in the loading space with the aid of a mixture height meter, and determining a mixture volume ($V_h$) of the mixture in the loading space on the basis of the mixture height ($h_h$),
- determining a mass (m) of the mixture in the loading space, wherein the device is furthermore arranged for:
- determining a density of the settled mixture ($\rho_s$),
- determining a density of the mixture soup ($\rho_{mi}$)
- determining the volume ($V_s$) of the settled bed on the basis of the determined mixture volume ($V_h$), the mass (m) of the mixture, the density of the settled mixture ($\rho_s$), and the determined density of the mixture soup ($\rho_{mi}$) using the formula $V_s = (m - V_h \rho_{mi}) / (\rho_s - \rho_{mi})$.

According to one embodiment, a device is provided wherein the density of the mixture soup ($\rho_{mi}$) is determined by means of

- determining a pressure in the mixture soup ($P_i$) at a known height $h_i$ in the mixture soup with the aid of a pressure meter,
- determining the density of the mixture soup ($\rho_{mi}$) on the basis of the determined pressure in the mixture soup ($P_i$) at a known height ($h_i$) and the mixture height ($h_h$) using the formula: $\rho_{mi} = P_i / \{g (h_h - h_i)\}$.

According to one embodiment, a device is provided wherein the density of the mixture soup ($\rho_{mi}$) is determined by means of

- determining a density-dependent parameter in the mixture soup with a meter, such as a pressure meter, a radiation meter with an associated source or a sound meter with an associated source, placed in the mixture soup,
- determining the density of the mixture soup ($\rho_{mi}$) on the basis of the determined density-dependent parameter.

The density-dependent parameter may, for example, be the pressure, but also other physical principles, such as:

- the emission of radioactive radiation and the measurement of the received radiation, wherein the strength of the received radiation is a function of the density: the received radiation decreases as the density increases,
- the emission of electromagnetic waves and the measurement of the received waves, wherein the strength of the received waves and the time delay thereof is a function of the density (patent NL2000362): the received signal attenuates and the time delay reduces as the density increases,
- the emission of ultrasonic sound and the measurement of the sound reflected by the grains of sand, wherein the strength of the reflected sound increases as the density increases.

According to one embodiment, a device is provided wherein the device comprises at least one meter, such as a pressure meter, a radiation meter with an associated source or a sound meter with an associated source, placed at a known height in the loading space. The meter may be a pressure meter, but may also generally be a meter which can measure a density-dependent parameter. The meter may furthermore comprise means for converting the measured parameter into a density value.

According to one embodiment, a device is provided wherein the at least one meter is placed in the wall of the loading space.

According to one embodiment, a device is provided wherein the device comprises two or more meters, such as pressure meters, radiation meters with associated sources, or sound meters with associated sources, placed at different known heights in the loading space.

According to one embodiment, a device is provided wherein the device comprises two or more groups of meters placed at different known heights in the loading space, wherein the different groups are placed at different locations in the loading space.

According to one embodiment, a device is provided wherein the one or more meters are placed in a measuring tube placed in the loading space.

According to one embodiment, a device is provided wherein the pressure meter is a bubble measurement system.

According to one embodiment, a device is provided wherein the device is furthermore arranged to determine the height of the settled bed ($h_s$).

According to one embodiment, a device is provided wherein the device is furthermore arranged to

- establish that the settled bed passes a meter, such as a pressure measurement point, by establishing that the measured parameter changes by more than a determined threshold value,
- determine a corresponding volume of the settled bed ($V_s$), and
- calculate the density of the settled bed ($\rho_s$).

According to one aspect, a device is provided for monitoring the volume ($V_s$) of a settled bed in a mixture in a loading space of a machine, wherein the mixture comprises a settled bed and a mixture soup which is located above the settled bed, wherein the device is arranged to determine a volume ($V_s$) of a settled bed at least twice at different times.

According to one embodiment, a device is provided wherein the device is furthermore arranged to determine a speed of increase in the volume ($V_s$) of the settled bed.

According to one aspect, a machine is provided comprising a device to determine a height of a settled bed ($h_s$) as discussed above.

According to one aspect, a central module is provided comprising a processor, wherein the central module is designed to carry out one of the methods as described above.

According to one aspect, a computer program is provided which, when loaded onto a central module of this type, enables the processor of the central module to carry out one of the methods described above.

According to one aspect, a data medium is provided, comprising a computer program of this type.

BRIEF DESCRIPTION OF THE DRAWINGS

Embodiments of the invention will be described below, purely by way of example, with reference to the accompanying schematic drawings, wherein corresponding components are indicated by corresponding reference symbols, and wherein:

Fig. 1 shows schematically a cross section of the loading space of a machine,
Figures 2 - 4 show schematically a cross section of the loading space of a machine according to different embodiments,
Fig. 5 shows schematically a method according to one embodiment, and
Fig. 6 shows schematically a central module.

The drawings are intended for illustrative purposes only, and do not serve to restrict the scope of protection, which is defined by the claims.

DETAILED DESCRIPTION

In the embodiments discussed here, a method and device are discussed which are suitable for determining the height $h_s$ of the settled bed 5 in a loading space 1 of a machine, even during the loading process.

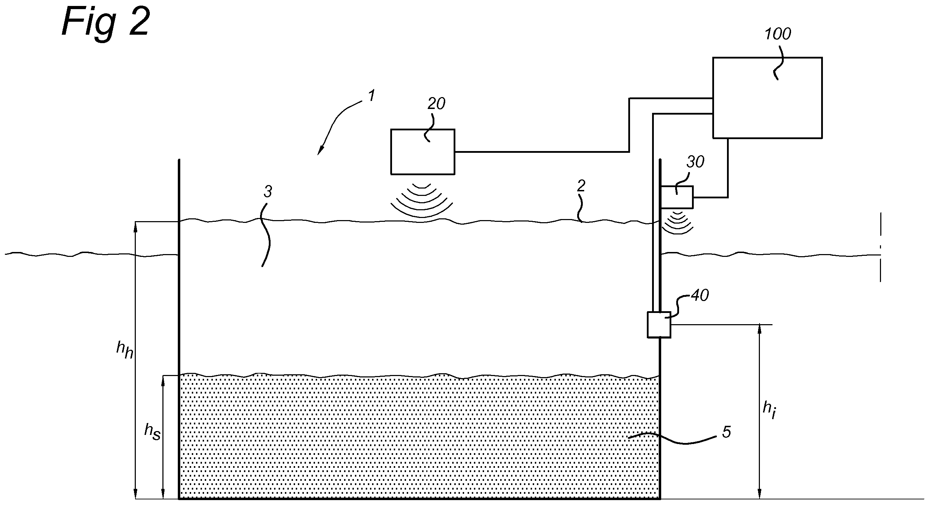

Fig. 2 shows schematically a cross section of a loading space 1 of a machine. The loading space 1 is partially filled with a mixture that consists of a settled bed 5 and a mixture soup 3, which is located above the settled bed 5.

The method comprises the step (a) of determining the mixture height $h_h$ of the mixture in the loading space, and determining a volume $V_h$ of the mixture in the loading space on the basis of the mixture height $h_h$.

Fig. 2 shows a mixture height meter 20 which is designed to determine the mixture height $h_h$ of the mixture in the loading space 1. The mixture height meter 20 can use ultrasonic distance measurements or radar distance measurements. The mixture height meter 20 can therefore be placed above the mixture so that the mixture height $h_h$ can be measured from above. Other measuring techniques and devices can of course also be used, for example in the form of markings disposed on the inside of the loading space 1, a float with cable distance measurement or an (electronic) dipstick. The measured mixture height $h_h$ can be forwarded by the mixture height meter 20 to a central module 100, which will be discussed in more detail below. The mixture height meter 20 can be controlled by the central module 100.

The volume $V_h$ of the mixture in the loading space 1 can easily be calculated by the central module 100 on the basis of the determined mixture height $h_h$ of the mixture, taking into account the shape of the loading space (shown in Fig. 2 as rectangular for the sake of simplicity) and with the trim and possibly heel of the machine.

The method may furthermore comprise the step (b) of determining the mass m of the mixture in the loading space 1.

The mass m of the mixture in the loading space can be determined by measuring the depth change of the machine during loading, in the case where the machine is a vessel. The mass of the additionally displaced quantity of water $\Delta V_w$ is equal to the weight m in the loading space: $m = \Delta V_w \cdot \rho_w$, where $\rho_w$ is the density of the water in which the machine travels. This will be understood by the person skilled in the art. The mass can possibly also be determined by weighing the contents of the loading space with a weighing installation.

Depth changes can be determined in any known and suitable ways, shown schematically in Fig. 2 by a depth meter 30. The depth meter 30 can be controlled by the central module 100, and can forward the measurement data to the central module 100. A different, much-used method is to place one or more pressure sensors in the floor or wall of the machine. The ship's sinkage $h_w$ can be calculated from the pressure $P_w$: $h_w = P_w / (g \cdot \rho_w)$, where g is the gravitational acceleration.

The average specific gravity of the mixture in the loading space can be calculated from the data obtained in steps a) and b): $\rho_h = m / V_h$. However, the height $h_s$ of the settled bed 5 is not thus known, and the speed at which this increases during loading is therefore also not known.

The method therefore furthermore comprises the step (c) for determining a density of the settled mixture ($\rho_s$). This can be done in any suitable ways, for example by estimating the density of the settled mixture $\rho_s$. An estimate can specifically be made on the basis of previously carried out investigation of a settled mixture obtained from the same or an adjacent location. A sample of the settled mixture can also be taken. Substrate samples are also often taken before the start of a dredging project, on the basis of which $\rho_s$ and the variation thereof can be determined. A typical value of the density of the settled mixture is 2000 kg/m$^3$. It is known from the literature (inter alia, by means of measurements) that the settled bed 5 has a normally homogeneous density $\rho_s$. It can be calculated that a maximum error in $\rho_s$ of 50 kg/m$^3$ (2.5%) results in a calculation error of around 6% in the sand bed height. This is more than sufficient for optimising the dredging process. Moreover, $\rho_s$ is generally more accurately calculated.

The determined value of the density of the settled mixture $\rho_s$ can be stored in the central module 100 or can be entered by a user via an interface, for example via a keyboard.

A density of the mixture soup is determined in a following step (d). This can be done in different ways, with the aid of meters placed in the loading space which can determine a density-dependent parameter, such as, for example, the pressure, attenuation of a radioactive or electromagnetic radiation signal, or amplification of a reflected ultrasonic sound signal. In the case of these last techniques, a suitable radioactive, electromagnetic or ultrasonic sound source can be used, which is placed at a predefined distance from the meter.

If the pressure is used, a pressure $P_i$ is determined in step (d) by the pressure meter 40 in the mixture soup 3 at a known height $h_i$ in the mixture soup 3. The density of the mixture soup $\rho_m$ is calculated by determining the pressure $P_i$ at a known height. If the density $\rho_m$ of the mixture soup 3, the density $\rho_s$ of the settled bed 5 and the total loading space mass m are known, the height of the settled bed 5 in relation to the floor of the loading space can be determined. This will be explained in detail below.

This is done in a last step (e) of the method, wherein the volume ($V_s$) of the settled bed and the resulting height of the settled bed ($h_s$) are determined on the basis of the determined mixture volume ($V_h$), the mass (m) of the mixture, the density of the settled mixture ($\rho_s$) and the determined pressure in the mixture soup ($P_i$).

As shown in Fig. 2, at least one pressure meter 40 is placed in the mixture soup.

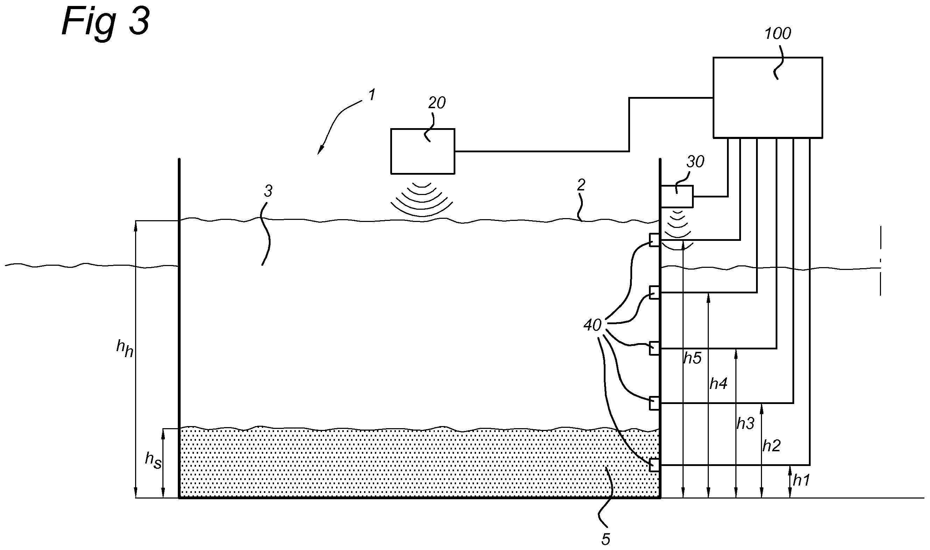

Fig. 3 shows an alternative embodiment, in which a number of pressure meters 40, for example more than two, are placed at different, known heights in the loading space 1. The number (n) of pressure meters 40 can be selected differently, depending on the circumstances. Each pressure meter has an index i, wherein i runs from 1 to n (i=1..n). In Figure 3, n=5 is chosen, but fewer or more pressure meters 40 are also possible.

The pressure meters 40 are placed at different known heights $h_i$ in the loading space 1.

Instead of pressure meters 40, meters can be more generally used which are capable of measuring a density-dependent parameter, from which the density can be determined.

In order to determine the density of the mixture soup $\rho_m$ in the loading space 1 from the pressure measurements, at least one determined pressure value $P_i$ is used in the mixture soup 3, with the aid of a determined pressure meter 40 at a known height $h_i$ in the mixture soup 3.

As the height of the mixture $h_h$ in the loading space is also measured (step a) and the height $h_i$ of the pressure measurement point is known, the density of the mixture soup can be calculated by the relevant pressure meter 40:

$$\rho_{mi} = P_i / \{g\,(h_h - h_i)\},$$

where g is the gravitational acceleration ($\approx$ 9.8 m/s$^2$).

It must of course be verified that the pressure measurement point lies in the mixture soup 3, and not in the settled bed 5 or above the mixture. Both conditions can easily be detected:
It can be established whether the pressure measurement point lies above the mixture soup 3, i.e. by testing whether $h_h < h_i$ and/or the pressure value $P_i$ is more or less equal to the ambient pressure (atmospheric pressure).

If meters other than pressure meters are used, a density of air is then measured.

It can also be established whether the pressure measurement point is located under the mixture soup 3: If, at a given time, the sand bed height $h_s$ calculated from the pressure is more or less equal to the height of the pressure sensor $h_i$, it is then assumed that the pressure sensor will be located under the sand bed. In any event, with the normal method, the sand bed will rise and not fall.

If meters other than pressure meters are used, a density of approximately the settled mixture ($\rho_s$) is measured.

The measured density or pressure value(s) $P_i$ can be forwarded to the central module 100. The density or pressure meters 40 can be controlled by the central module 100 in order to carry out a measurement. On the basis of the received density or pressure value(s) $P_i$, the central module 100 can establish which (pressure) meters are located in the mixture soup 3 by carrying out the tests described above.

It can be assumed that the mixture soup 3 above the settled bed 5 has a virtually homogeneous density. However, this density $\rho_m$ will vary (increase) during the loading process, but, at any time during the loading process, is more or less uniform throughout the entire mixture soup 3. Only the top layer 2 of the mixture soup 3 has a lower density, but this top layer is approx. 0.1 to 0.2 m high and can be ignored when determining the sand bed height and the speed of increase therein.

The sand bed height is calculated on the basis of the mass balance, whereby the mass is calculated, for example, from the sinkage of the machine, although other weight measurements are also possible. This determined mass m in the loading space must be equal to the mass of the settled mixture plus the mass of the mixture soup. For this, the measured and calculated heights $h_h$ and $h_s$ must be converted into volumes. This can be done on the basis of the so-called loading space tables, in which the relationship between the fluid level and volume is established, taking account of the trim and possibly the heel of the vessel. The trim and possibly the heel of the vessel can be determined in any ways known to the person skilled in the art.

These loading space tables can also be calculated by means of a mathematical formula f as a function of fluid level, trim and possibly heel: The inverse formula $f^{-1}$ is used to derive a height associated with a determined volume.

$V = f\,(h, \text{trim}, \text{heel})$
$V_h = f\,(h_h, \text{trim}, \text{heel})$      the total mixture volume
$V_s = f\,(h_s, \text{trim}, \text{heel})$      the (still to be determined) volume of the settled sand bed
$V_m = f\,(h_m, \text{trim}, \text{heel})$      the volume of the mixture soup
$V_m = V_h - V_s$      the volume balance

If no account is taken of the heel, this can be left out of the above formulae.

The formula f (and the inverse thereof) defines the relationship between height and volume, taking account of the trim and possibly the heel of the vessel and taking account of the specific shape of the loading space. The following must apply according to the mass balance:

$$m = V_s\,\rho_s + V_m\,\rho_{mi}$$

$$m = V_s\,\rho_s + (V_h - V_s)\,\rho_i$$

$$m = V_s\,(\rho_s - \rho_i) + V_h\,\rho_i.$$

This provides the volume of the sand bed

$$V_s = (m - V_h\,\rho_{mi}) / (\rho_s - \rho_{mi})$$

using the measured or calculated density of the mixture soup 3

$$\rho_{mi} = P_i / (g\,(h_h - h_i)).$$

The sand bed height $h_s$ is found by consulting the loading space tables or with the aid of the inverse loading space formula $f^1$:

$$h_s = f^{-1}\,(V_s, \text{trim}, \text{heel}).$$

Where:

- $\rho_{mi} = P_i / (g\,(h_h - h_i))$ is the calculated density of the mixture soup
- m is the mass of the contents of the loading space,
- $V_h$ = the volume of the contents of the loading space,
- $P_i$ = the pressure measurement i (i = 1.. n) measured for each measurement point by pressure meters 40,
- $\rho_s$ = the density of the settled mixture, which is generally well known for each work environment, being around 2000 kg/m$^3$.

This calculation, or variations of this calculation method, can be carried out by the central module 100. The central module 100 can calculate the height $h_s$ of the settled bed a number of times during loading, thereby determining the speed of increase in the height of the settled bed.

As shown in the embodiment from Fig. 3, a plurality of meters, such as density or pressure measurement points, can be provided at different heights $h_i$ within the loading space. This offers a number of advantages. In the first place, it can be ensured in this way that at least one density or pressure measurement point is located in the mixture soup 3 during a large part of the loading process, i.e. both in cases where only a small quantity of mixture has been loaded (the lowest-placed density or pressure meter will then be located in the mixture soup 3), and in cases where the loading space has been more or less fully loaded (at least one highest-placed density or pressure meter will then be located in the mixture soup 3).

Moreover, more than one density or pressure measurement point will be located in the mixture soup 3 during at least a part of the loading process. A redundant measurement is thus obtained which can be made more accurate through averaging, or with which it is possible to detect when a density or pressure meter 40 is defective.

It is thus possible, for example, to determine the height of the settled bed $h_s$ on the basis of a plurality of density or pressure measurements. The determined heights can be averaged.

It is also possible to determine more than one density $\rho_{mi}$ of the mixture soup 3 and to average this for the further calculations.

A higher accuracy can thus be achieved. It is also possible to detect possible incorrect pressure measurements by comparing different measurement values or determined densities $\rho_{mi}$ of the mixture soup.

It is thus possible, for example, to work with three density or pressure measurement points which are disposed at different heights in the loading space. In the case of a loading space which is 10 metres high, density or pressure measurement points can, for example, be disposed at heights of 1, 5 and 8 metres.

A method is furthermore provided for monitoring the volume $(V_s)$ of the settled bed in a mixture in a loading space 1 of a machine, wherein the mixture consists of a settled bed and a mixture soup which is located above the settled bed, wherein the method comprises determining the volume $(V_s)$ of a settled bed at least twice at different times according to one of the methods described above. The method can alternatively or additionally relate to determining the height $h_s$ of the settled bed at least twice at different times according to one of the methods described above.

By determining the volume $(V_s)$ and/or the height $(h_s)$ of the settled bed at different times, the speed of increase in the settled bed can be determined on the basis of the volume and/or on the basis of the height. This parameter can be used for the optimum setting of the loading speed of the loading space and can be used to determine a settling speed.

Meters

It is furthermore noted that the loading space 1 is usually loaded with different types of substrate, which are often contaminated with, for example, waste, tree trunks, pebbles, chains, cables, etc. Equipment placed in the loading space 1, such as density or pressure meters 40, will therefore have to be of robust design, otherwise they will not remain intact for long.

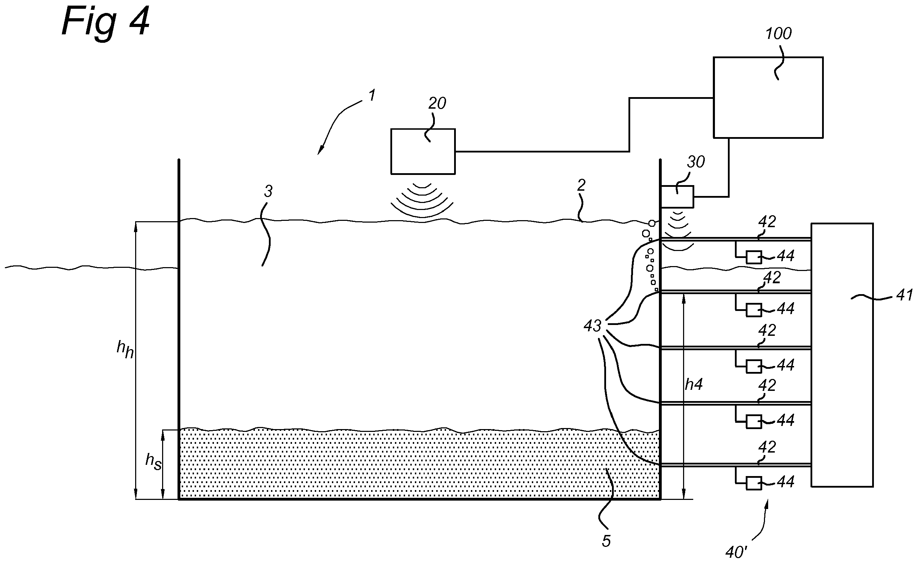

According to an embodiment shown in Fig. 4, the pressure meter 40 or the number of pressure meters 40 is formed by a bubble measurement system 40'. Such bubble measurement systems 40' are known from patent publications JP2009300183 and US5052222.

A bubble measurement system 40' comprises a pressure regulating system 41, which can feed air by means of lines 42 to the various measurement points, where the lines open out by means of openings 43 into the loading space 1. Air can be fed at a very low speed through the lines 42. The pressure required for this purpose is regulated for each measurement point by the pressure regulating system 41, so that small bubbles emerge from the openings 43.

The bubble measurement system 40' measures the air speed in the air line: if it is too high, a control valve in the line is (more) tightly controlled, if it is too low, the control valve is further opened.

Due to the relatively low speed and consequently correct counter-pressure, the mixture cannot penetrate from the loading space 1 into the lines 42. Due to the low pressure, the pressure loss over the lines 42 is negligible. The bubble measurement system 40' is furthermore capable of measuring the line pressure in the various lines 42.

This can be done by the pressure regulating system 41 itself, or by means of pressure meters 44, as shown schematically in Fig. 4.

This line pressure is a measure of the pressure in the mixture soup ($P_i$) at the height of the opening 43 associated with the relevant line 42. Given the relatively low speed of the air in the line, it can be assumed that the determined line pressure is more or less equal to the pressure in the mixture soup at the height of the opening 43 associated with the relevant line 42, even if the line 42 runs upwards and the pressure meters 44 are placed higher.

A different suitable fluid can of course be used instead of air.

The pressure regulating system 41 can be controlled by the central module 100, and the measured line pressures can be forwarded to the central module 100. For the sake of clarity, the required connections between the pressure meters 44 and the central module 100 are not shown in Fig. 4.

The bubble measurement system 40' can also be used to determine the density of the settled mixture $\rho_s$. This can be done at the time when the rising settled bed passes the pressure measurement point. At that time, the pressure measured at the pressure measurement point will change, for example will increase, substantially because the air can escape less easily from the bubble point via the settled bed. This applies above all to clay, fine sand, and coarse sands with clay fractions.

The passing of the settled bed along a pressure measurement point can thus be established by establishing that the pressure on that determined pressure measurement point deviates by more than a determined threshold value from the measured pressure on other pressure measurement points, or that the determined pressure deviates within a pre-determined time interval (for example 10 seconds or 1 minute) by more than a determined threshold value from pressures previously determined within a determined time period.

If an alternative density measurement is used instead of a pressure measurement, the passing of the sand bed along the meter is detected by the abrupt change in the density measurement to approximately the settled value ($\rho_s$).

The density of the settled mixture $\rho_s$ can be determined as follows: At the time when the passing of the settled bed along a measurement point is established, the height of the settled bed is relatively accurately known, i.e. equal to the height of the pressure measurement point concerned: $h_s = h_i$.

This information can now be known in order to correct the value for the density of the settled mixture $\rho_s$, at any rate

$$V_s = V_i = f\,(h_i,\ trim,\ heel)$$

$$V_s = V_i = (m - V_h\,\rho_{mi})\,/\,(\rho_s - \rho_{mi})\ \text{(as previously derived)}$$

or:

$$\rho_s = (m - \rho_{mi}\,(V_h - V_i))\,/\,V_i.$$

The value of $\rho_{mi}$ can of course be determined with the aid of a higher-positioned pressure measurement point, or can be based on a previously determined value.

Central module

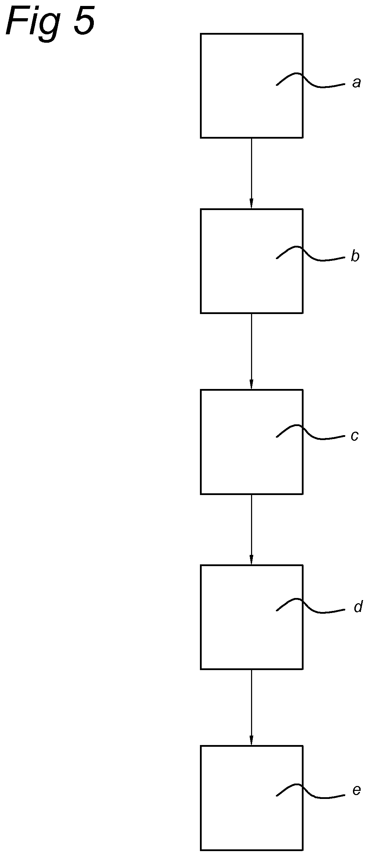

The method as described above can be carried out and controlled by a central module 100. The central module 100 can be arranged to carry out the method as shown schematically in Fig. 5.

The central module 100 can be designed as a computer device or computer system. The central module 100 can be formed by a personal computer, a laptop, a server, or can be designed as a determined piece of hardware or a software program which can run on a computer.

The central module 100 is shown in Figures 2 - 4 as a single block, but it will be understood that the central module 100 can consist of a plurality of functional, interworking blocks.

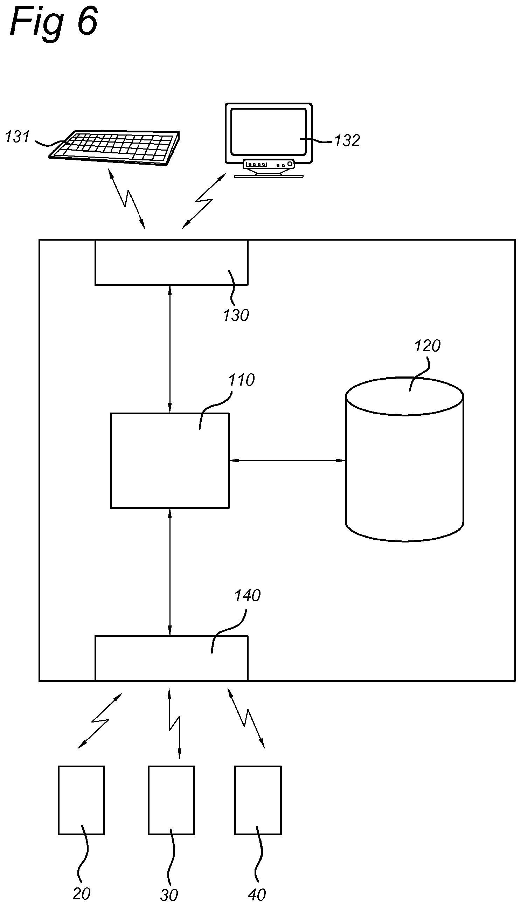

Fig. 6 shows a possible embodiment of the central module 100 as a computer. Fig. 6 shows a schematic block diagram of a possible embodiment of the central module 100. The central module 100 comprises a processor 110 and a memory 120, which are interconnected. The processor 110 can read data from the memory 120, and can read instructions from the memory 120 and then execute them in order to thereby carry out the method described above. The memory may comprise a computer program with instructions which are readable and executable by the processor 110, so that the central module can carry out the methods described here.

The memory may consist of one or more memories, including a hard disk, a Read Only Memory (ROM), an Electrically Erasable Programmable Read Only Memory (EEPROM) and a Random Access Memory (RAM). It will be understood that other memories can also be used, some of which may be located remotely.

The processor 110 is connected to a user interface 130, which enables interaction with a user. The user interface 130 may be connected, for example, to a keyboard 131 and a monitor 132. By means of the user interface, a user can, for example, control the central module in order to determine the height of the settled bed.

The processor 110 is connected to an input-output interface 140, via which communication with peripheral equipment is possible, such as, for example, with a mixture height meter 20, depth meter 30 and density or pressure meter 40, 40'.

The processor 110 is shown as a single block, but it will be understood that the processor 110 may comprise a plurality of processors operating in parallel.

The connections shown in Figures 2 - 4 and 6 may be physical connections (via a wire or bus), or may be wireless connections. The connections are shown only to indicate that connected units can communicate with one another in any way.

A device is thus provided for determining a volume $V_s$ of a settled bed in a mixture in a loading space 1 of a machine, wherein the mixture consists of a settled bed and a mixture soup which is located above the settled bed. The device is designed for:

- determining a mixture height ($h_h$) of the mixture in the loading space with the aid of a mixture height meter (20), and determining a mixture volume ($V_h$) of the mixture in the loading space on the basis of the mixture height ($h_h$),
- determining a mass (m) of the mixture in the loading space (1).

The device is furthermore designed for:

- determining a density of the settled mixture ($\rho_s$),

- determining a density of the mixture soup ($\rho_{mi}$), for example by determining a pressure in the mixture soup ($P_i$) at a known height $h_i$ in the mixture soup with the aid of a pressure meter (40),

- determining the volume ($V_s$) of the settled bed on the basis of the determined mixture volume ($V_h$), the mass (m) of the mixture, the density of the settled mixture ($\rho_s$), and the density of the mixture soup ($\rho_{mi}$). If the pressure in the mixture soup had been determined, this can be done by

- determining the density of the mixture soup ($\rho_{mi}$) on the basis of the determined pressure in the mixture soup ($P_i$) at a known height ($h_j$) and the mixture height ($h_h$) using the formula: $\rho_{mi} = P_i / \{g (h_h - h_i)\}$.

The device can be provided by a central module 100, as described above. The device may comprise the mixture height meter 20, depth meter 30 and density or pressure meter(s) 40, or may be designed to receive measurement values therefrom.

The device may furthermore comprise a density or pressure meter 40 placed at a known height in the loading space. The density or pressure meter 40 may be placed in a wall of the loading space. Alternatively, the one or more density or pressure meters 40 may be placed in a measuring tube placed in the loading space.

The device may also comprise two or more density or pressure meters 40 placed at different known heights in the loading space.

For more accurate determinations, groups of density or pressure meters can be placed at a plurality of locations, for example at the front and back in the loading space and/or on the left (port) and right (starboard) in the loading space. The device may thus comprise two or more groups of density or pressure meters 40 placed at different known heights in the loading space, wherein the different groups are placed at different locations in the loading space.

As already indicated, the pressure meter may be a bubble measurement system 40'. Bubble measurement systems of this type are robust and self-cleaning.

The term meter or density meter as used in this text refers to a meter which is capable of measuring a density-dependent parameter, from which the density can be derived. The density meter may, for example, be a pressure meter, wherein the density can be derived from the pressure with the aid of the following formula: $\rho_{mi} = P_i \,/\, \{g\,(h_h - h_i)\}$.

The density meter may also be a sound meter with an (ultra)sonic source, wherein the source transmits an acoustic signal, the sound reflected by the sand grains is detected by the sound meter and wherein the density can be calculated from the reflected sound signal.

The density meter may also be a radiation meter with a radioactive source, wherein the source transmits a radiation signal which is detected by the radiation meter, and wherein the density can be calculated from the detected radiation signal.

The density meter may also be a receive antenna with a transmit antenna, wherein the transmit antenna transmits electromagnetic waves/radiation, which is/are detected by the receive antenna, and wherein the density can be calculated from the detected waves.

The density meter may thus also be a meter with a source, wherein the source transmits a signal which is detected by the meter, and wherein the density can be calculated from the detected signal.

It will be clear that the embodiments described above are described only by way of example and not in any limiting sense, and that different modifications and adaptations are possible without exceeding the scope of the invention, and that the scope is determined only by the attached claims.

**Claims**

1. Method for determining a volume ($V_s$) of a settled bed in a mixture in a loading space (1) of a machine, wherein the mixture consists of a settled bed and a mixture soup which is located above the settled bed, and wherein the method comprises:

   a) determining a mixture height ($h_h$) of the mixture in the loading space, and determining a mixture volume ($V_h$) of the mixture in the loading space on the basis of the mixture height ($h_h$),
   b) determining the mass (m) of the mixture in the loading space (1),

   **characterized in that** the method furthermore comprises:

   c) determining a density of the settled mixture ($\rho_s$),
   d) determining a density of the mixture soup ($\rho_{mi}$), and
   e) determining the volume ($V_s$) of the settled bed on the basis of the determined mixture volume ($V_h$), the mass (m) of the mixture, the density of the settled mixture ($\rho_s$), and the determined density of the mixture soup ($\rho_{mi}$) using the formula $V_s = (m - V_h\,\rho_{mi}) \,/\, (\rho_s - \rho_{mi})$.

2. Method according to claim 1, wherein d) comprises:

   - determining a pressure in the mixture soup ($P_i$) at a known height $h_i$ in the mixture soup, and
   - determining the density of the mixture soup ($\rho_{mi}$) on the basis of the determined pressure in the mixture soup ($P_i$) at a known height ($h_i$) and the mixture height ($h_h$) using the formula: $\rho_{mi} = P_i \,/\, \{g\,(h_h - h_i)\}$.

3. Method according to claim 1, wherein d) comprises:

   - determining a density-dependent parameter in the mixture soup, such as a pressure, strength of radioactive radiation, electromagnetic waves/radiation or ultrasonic sound,
   - determining the density of the mixture soup ($\rho_{mi}$) on the basis of the determined density-dependent parameter.

4. Method according to one of the preceding claims, wherein c) comprises estimating or measuring the density of the settled mixture ($\rho_s$).

5. Method according to one of the preceding claims, wherein d) is carried out with at least one meter placed in the mixture soup, such as a pressure meter, a radioactive radiation meter with an associated source, an electromagnetic receive antenna with an associated transmit antenna/source, or a sound meter with an associated source.

6. Method according to one of the preceding claims, wherein d) is carried out with two or more meters placed at different heights in the loading space, such as pressure meters, radiation meters with associated sources, an electromagnetic receive antenna with an associated transmit antenna/source, or sound meters with associated sources.

7. Method according to one of claims 5 or 6, wherein one or more pressure meters are formed by a bubble measurement system (40').

8. Method according to one of the preceding claims, wherein e) furthermore comprises determining the height of the settled bed ($h_s$) on the basis of the determined volume of the settled bed ($V_s$) using a loading space table taking into account the trim and possibly the heel of the machine, or using a formula:

$$h_s = f^{-1} (V_s, \text{trim, heel}).$$

9. Method according to claim 2, wherein c) comprises establishing that the settled bed passes a pressure measurement point by establishing that the pressure on a determined pressure measurement point changes by more than a determined threshold value, determining the corresponding volume of the settled bed ($V_s$) in step e) and calculating the density of the settled bed ($\rho_s$).

10. Method according to claim 3, wherein c) comprises establishing that the settled bed passes a meter by establishing that the determined density becomes greater than a predefined determined threshold value, determining a corresponding volume of the settled bed ($V_s$) and calculating the density of the settled bed ($\rho_s$).

11. Method for monitoring the volume ($V_s$) of a settled bed in a mixture in a loading space (1) of a machine, wherein the mixture comprises a settled bed and a mixture soup which is located above the settled bed, wherein the method comprises determining a volume ($V_s$) of a settled bed according to one of claims 1 - 10 at least twice at different times.

12. Device for determining a volume ($V_s$) of a settled bed in a mixture in a loading space (1) of a machine, wherein the mixture consists of a settled bed and a mixture soup which is located above the settled bed, the device comprising a central module (100) configured for receiving measurement values from at least one meter, and configured for the method of claim 1.

13. Vessel comprising a device for determining a height of a settled bed ($h_s$) according to claim 12.

14. Device of claim 12, wherein the central module (100) comprises a processor (110), and the device further comprises a height meter, depth meter and density or pressure meter.

15. Computer program which, when loaded on the device of claim 12, enables the processor of the central module (100) to carry out any one of the methods according to claims 1 - 11.

16. Data medium, comprising a computer program according to claim 15.


**Patentansprüche**

1. Verfahren zum Bestimmen eines Volumens ($V_s$) eines abgesetzten Bettes in einer Mischung in einem Laderaum (1) einer Maschine, wobei die Mischung aus einem abgesetzten Bett und einer Mischungssuppe, die sich über dem abgesetzten Bett befindet, besteht, und wobei das Verfahren Folgendes umfasst:

a) Bestimmen einer Mischungshöhe ($h_h$) der Mischung in dem Laderaum und Bestimmen eines Mischungsvolumens ($V_h$) der Mischung in dem Laderaum basierend auf der Mischungshöhe ($h_h$),
b) Bestimmen der Masse (m) der Mischung in dem Laderaum (1), **dadurch gekennzeichnet, dass** das Verfahren ferner Folgendes umfasst:

c) Bestimmen einer Dichte ($\rho_s$) der abgesetzten Mischung,
d) Bestimmen einer Dichte ($\rho_{mi}$) der Mischungssuppe, und
e) Bestimmen des Volumens ($V_s$) des abgesetzten Bettes basierend auf dem bestimmten Mischungsvolumen ($V_h$), der Masse (m) der Mischung, der Dichte ($\rho_s$) der abgesetzten Mischung und der bestimmten Dichte ($\rho_{mi}$) der Mischungssuppe unter Verwendung der Formel $V_s=(m - V_h \cdot \rho_{mi})/(\rho_s-\rho_{mi})$.

2. Verfahren nach Anspruch 1, wobei d) Folgendes umfasst:

- Bestimmen eines Drucks (Pi) in der Mischungssuppe bei einer bekannten Höhe $h_i$ in der Mischungssuppe, und
- Bestimmen der Dichte ($\rho_{mi}$) der Mischungssuppe basierend auf dem bestimmten Druck (Pi) in der Mischungssuppe bei einer bekannten Höhe (hi) und der Mischungshöhe ($h_h$) unter Verwendung der Formel: $\rho_{mi}= P_i/\{g \cdot (h_h - h_i)\}$.

3. Verfahren nach Anspruch 1, wobei d) Folgendes umfasst:

- Bestimmen eines dichteabhängigen Parameters in der Mischungssuppe, wie beispielsweise eines Drucks, einer Stärke der radioaktiven Strahlung, elektromagnetischer Wellen bzw. Strahlung oder Ultraschall,
- Bestimmen der Dichte ($\rho_{mi}$) der Mischungssuppe basierend auf dem bestimmten dichteabhängigen Parameter.

4. Verfahren nach einem der vorhergehenden Ansprüche, wobei c) das Schätzen oder Messen der Dichte ($\rho_s$) der abgesetzten Mischung umfasst.

5. Verfahren nach einem der vorhergehenden Ansprüche, wobei d) mit mindestens einem Messgerät, wie beispielsweise einem Druckmessgerät, einem Messgerät für radioaktive Strahlung, einer elektromagnetischen Empfangsantenne mit einer zugeordneten Sendeantenne bzw. -quelle, oder einem Schallmessgerät mit einer zugeordneten Quelle, das in der Mischungssuppe positioniert wird, ausgeführt wird.

6. Verfahren nach einem der vorhergehenden Ansprüche, wobei d) mit zwei oder mehr Messgeräten, beispielsweise Druckmessgeräten, Strahlungsmessgeräten mit zugeordneten Quellen, einer elektromagnetischen Empfangsantenne mit einer zugeordneten Sendeantenne bzw. -quelle, oder Schallmessgeräten mit zugeordneten Quellen, die in dem Laderaum auf unterschiedlichen Höhen positioniert sind, ausgeführt wird.

7. Verfahren nach einem der Ansprüche 5 oder 6, wobei ein oder mehrere Druckmessgeräte durch ein Blasenmesssystem (40') gebildet werden.

8. Verfahren nach einem der vorhergehenden Ansprüche, wobei e) ferner das Bestimmen der Höhe ($h_s$) des abge- setzten Bettes basierend auf dem bestimmten Volumen ($V_s$) des abgesetzten Bettes unter Verwendung einer Laderaumtabelle, die den Trimm und möglicherweise die Querneigung der Maschine berücksichtigt, oder unter Verwendung folgender Formel umfasst:

$$h_s = f^{-1}(V_s, \text{Trimm, Querneigung}).$$

9. Verfahren nach Anspruch 2, wobei c) das Feststellen, dass das abgesetzte Bett an einem Druckmesspunkt vorbeiläuft, durch Feststellen, dass sich der Druck auf einen bestimmten Druckmesspunkt um mehr als einen bestimmten Schwellenwert verändert, das Bestimmen des entsprechenden Volumens ($V_s$) des abgesetzten Bettes in Schritt e) und das Berechnen der Dichte ($\rho_s$) des abgesetzten Bettes umfasst.

10. Verfahren nach Anspruch 3, wobei c) das Einstellen, dass das abgesetzte Bett an einem Messgerät vorbeiläuft, durch Einstellen, dass die bestimmte Dichte größer wird als ein vorbestimmter Schwellenwert, das Bestimmen eines entsprechenden Volumens ($V_s$) des abgesetzten Bettes und das Berechnen der Dichte ($\rho_s$) des abgesetzten Bettes umfasst.

11. Verfahren zum Überwachen des Volumens ($V_s$) eines abgesetzten Bettes in einer Mischung in einem Laderaum (1) einer Maschine, wobei die Mischung ein abgesetztes Bett und eine Mischungssuppe, die sich über dem abgesetzten Bett befindet, umfasst, wobei das Verfahren das Bestimmen eines Volumens ($V_s$) eines abgesetzten Bettes nach einem der Ansprüche 1-10 mindestens zweimal zu unterschiedlichen Zeitpunkten umfasst.

12. Vorrichtung zum Bestimmen eines Volumens ($V_s$) eines abgesetzten Bettes in einer Mischung in einem Laderaum (1) eine Maschine, wobei die Mischung aus einem abgesetzten Bett und einer Mischungssuppe, die sich über dem abgesetzten Bett befindet, besteht, wobei die Vorrichtung ein zentrales Modul (100) umfasst, das zum Empfangen von Messwerten von mindestens einem Messgerät konfiguriert ist, und das für das Verfahren nach Anspruch 1 konfiguriert ist.

13. Schiff, das eine Vorrichtung zum Bestimmen einer Höhe (h$_s$) eines abgesetzten Bettes nach Anspruch 12 umfasst.

14. Vorrichtung nach Anspruch 12, wobei das zentrale Modul (100) einen Prozessor (110) umfasst, und die Vorrichtung ferner ein Höhenmessgerät, ein Tiefenmessgerät und ein Dichte- oder Druckmessgerät umfasst.

15. Computerprogramm, das dann, wenn es in die Vorrichtung nach Anspruch 12 geladen wird, den Prozessor des zentralen Moduls (100) in die Lage versetzt, eines der Verfahren nach den Ansprüchen 1-11 auszuführen.

16. Datenmedium, das ein Computerprogramm nach Anspruch 15 umfasst.

**Revendications**

1. Procédé pour déterminer un volume (V$_s$) d'un lit stabilisé dans un mélange dans un espace de chargement (1) d'une machine, dans lequel le mélange consiste en un lit stabilisé et une bouillon de mélange qui est situé au-dessus du lit stabilisé, et dans lequel le procédé comprend les étapes consistant à :

   a) déterminer une hauteur de mélange (h$_h$) du mélange dans l'espace de chargement, et déterminer un volume de mélange (V$_h$) du mélange dans l'espace de chargement sur la base de la hauteur de mélange (h$_h$),
   b) déterminer la masse (m) du mélange dans l'espace de chargement (1),

   **caractérisé en ce que** le procédé comprend en outre les étapes consistant à :

   c) déterminer une densité du mélange stabilisé (ρ$_s$),
   d) déterminer une densité du bouillon de mélange (ρ$_{mi}$), et
   e) déterminer le volume (V$_s$) du lit stabilisé sur la base du volume de mélange (V$_h$), de la masse (m) du mélange, de la densité du mélange stabilisé (ρ$_s$) déterminés, et de la densité déterminée du bouillon de mélange (ρ$_{mi}$) en utilisant la formule V$_s$ = (m -V$_h$ ρ$_{mi}$)/(ρ$_s$ - ρ$_{mi}$).

2. Procédé selon la revendication 1, dans lequel d) comprend :

   - la détermination d'une pression dans le bouillon de mélange (Pi) à une hauteur connue h$_i$ dans le bouillon de mélange, et
   - la détermination de la densité du bouillon de mélange (ρ$_{mi}$) sur la base de la pression déterminée dans le bouillon de mélange (P$_i$) à une hauteur connue (hi) et de la hauteur de mélange (h$_h$) en utilisant la formule : ρ$_{mi}$ = Pi/{g(h$_h$ - h$_i$)}.

3. Procédé selon la revendication 1, dans lequel d) comprend :

   - la détermination d'un paramètre dépendant de la densité dans le bouillon de mélange, tel qu'une pression, une force de rayonnement radioactif, des ondes/rayonnement électromagnétiques ou un son ultrasonique,
   - la détermination de la densité du bouillon de mélange (ρ$_{mi}$) sur la base du paramètre dépendant de la densité déterminé.

4. Procédé selon l'une des revendications précédentes, dans lequel c) comprend l'estimation ou la mesure de la densité du mélange stabilisé (ρ$_s$).

5. Procédé selon l'une des revendications précédentes, dans lequel d) est réalisé avec au moins un dispositif de mesure placé dans le bouillon de mélange, tel qu'un manomètre, un radiamètre de rayonnement radioactif avec une source associée, une antenne de réception électromagnétique avec une antenne/source d'émission associée, ou un sonomètre avec une source associée.

6. Procédé selon l'une des revendications précédentes, dans lequel d) est réalisé avec deux ou plus de deux dispositifs de mesure placés à différentes hauteurs dans l'espace de chargement, tels que des manomètres, des radiamètres avec des sources associées, une antenne de réception électromagnétique avec une antenne/source d'émission associée, ou des sonomètres avec des sources associées.

7. Procédé selon l'une des revendications 5 ou 6, dans lequel un ou plusieurs manomètres sont formés par un système de mesure à bulle (40').

**8.** Procédé selon l'une des revendications précédentes, dans lequel e) comprend en outre la détermination de la hauteur du lit stabilisé ($h_s$) sur la base du volume déterminé du lit stabilisé ($V_s$) en utilisant une table d'espace de chargement en tenant compte de l'assiette et éventuellement du gîte de la machine, ou en utilisant une formule :

$$h_s = f^{-1} (V_s, \text{assiette, gîte}).$$

**9.** Procédé selon la revendication 2, dans lequel c) comprend l'établissement que le lit stabilisé passe par un point de mesure de pression en établissant que la pression sur un point de mesure de pression déterminé change de plus d'une valeur de seuil déterminée, la détermination du volume correspondant du lit stabilisé ($V_s$) à l'étape e) et le calcul de la densité du lit stabilisé ($\rho_s$).

**10.** Procédé selon la revendication 3, dans lequel c) comprend l'établissement que le lit stabilisé passe par un dispositif de mesure en établissant que la densité déterminée devient supérieure à une valeur de seuil déterminée prédéfinie, la détermination d'un volume correspondant du lit stabilisé ($V_s$) et le calcul de la densité du lit stabilisé ($\rho_s$).

**11.** Procédé de surveillance du volume (Vs) d'un lit stabilisé dans un mélange dans un espace de chargement (1) d'une machine, dans lequel le mélange comprend un lit stabilisé et un bouillon de mélange qui est situé au-dessus du lit stabilisé, dans lequel le procédé comprend la détermination d'un volume ($V_s$) d'un lit stabilisé selon l'une des revendications 1 à 10 au moins deux fois à des instants différents.

**12.** Dispositif pour déterminer un volume ($V_s$) d'un lit stabilisé dans un mélange dans un espace de chargement (1) d'une machine, dans lequel le mélange consiste en un lit stabilisé et un bouillon de mélange qui est situé au-dessus du lit stabilisé, le dispositif comprenant un module central (100) configuré pour recevoir des valeurs de mesure provenant d'au moins un dispositif de mesure, et configuré pour le procédé selon la revendication 1.

**13.** Récipient comprenant un dispositif pour déterminer une hauteur d'un lit stabilisé ($h_s$) selon la revendication 12.

**14.** Dispositif selon la revendication 12, dans lequel le module central (100) comprend un processeur (110), et le dispositif comprend en outre un altimètre, un profondimètre et un densimètre ou un manomètre.

**15.** Programme informatique qui, lorsqu'il est chargé sur le dispositif selon la revendication 12, permet au processeur du module central (100) de mettre en œuvre l'un quelconque des procédés selon les revendications 1 à 11.

**16.** Support de données, comprenant un programme informatique selon la revendication 15.

EP 2 619 372 B1

## Fig 1

Fig 2

EP 2 619 372 B1

# Fig 3

EP 2 619 372 B1

Fig 4

# Fig 5

# Fig 6

131

132

130

120

110

140

20   30   40

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0456629 A
- EP 1783466 A
- US 4365509 A, CORNELIS CHRISTIAAN A

- NL 2000362
- JP 2009300183 B
- US 5052222 A

**Non-patent literature cited in the description**

- **T. L. WELP et al.** *Initial Corps Experience with Tons Dry Solids (TDS) Measurement,* July 2000, http://handle.dtic.mil/100.2/ADA380019

- Portable Meter System for Dry Weight Control in Dredging Hoppers. **JUAN J MUN0Z-PEREZ et al.** JOURNAL OF WATERWAY, PORT, COASTAL, AND OCEAN ENGINEERING. AMERICAN SOCIETY OF CIVIL ENGINEERS, 01 March 2003, 79-85